# FASCICULE DE BREVET EUROPEEN

(11) **EP 2 437 092 B1**
(45) Date de publication et mention de la délivrance du brevet: **08.07.2020**
(21) Numéro de dépôt: 11290436.2
(22) Date de dépôt: 26.09.2011
(51) Int. Cl.: G02B 7/00, G02B 13/14, G02B 27/64, F41G 3/08, F41G 7/26, F41G 3/22

(54) **PROCÉDÉ D'ATHERMALISATION D'UN SYSTÈME OPTOÉLECTRONIQUE ET SYSTÈME OPTOÉLECTRONIQUE ATHERMALISÉ**
ENTTHERMALISIERUNGSVERFAHREN FÜR EIN OPTOELEKTRONISCHES SYSTEM, UND ENTTHERMALISIERTES OPTOELEKTRONISCHES SYSTEM
METHOD FOR ATHERMALISATION OF AN OPTOELECTRONIC SYSTEM AND ATHERMALISED OPTOELECTRONIC SYSTEM

(30) Priorité: 01.10.2010 FR 1003898
(43) Date de publication de la demande: 04.04.2012
(73) Titulaire: MBDA France, 92350 Le Plessis-Robinson (FR)
(72) Inventeur: Tostivint, Frédéric, 18000 Bourges (FR); Tisseron, Bernard, 58180 Marzy (FR); Sulpis, Jean-Pierre, 18230 Saint Doulchard (FR); Blin, Michel, 18000 Bourges (FR); Baron, Didier, 18570 La Chapelle Saint Ursin (FR); Angoulvant, Didier, 18340 Plaimpied (FR)
(74) Mandataire: Gevers & Orès

(56) Documents cités:
- US-A- 5 024 493
- US-A- 5 412 510
- US-A- 5 557 474
- US-A1- 2008 043 105
- US-A1- 2008 160 274
- US-B1- 6 304 392

## Description

La présente invention concerne un procédé d'athermalisation d'un système optoélectronique, par exemple d'un système embarqué sur un avion, ainsi qu'un système optoélectronique ainsi athermalisé.

Dans le cadre de la présente invention, on entend par athermalisation le fait de rendre un système optoélectronique insensible aux variations de températures sur au moins une plage de températures donnée, c'est-à-dire le fait de stabiliser ce système (pour éviter des modifications et des déplacements dus à une variation de température) sur cette plage de températures. Un système ainsi insensibilisé est dit athermalisé.

Plus particulièrement, la présente invention s'applique à un système optoélectronique comprenant :
- un dispositif optique qui est susceptible d'observer l'environnement et qui présente un plan focal ;
- un détecteur, par exemple infrarouge, qui coopère avec ce dispositif optique et qui comprend une matrice de détection présentant une orientation stable par rapport audit plan focal, de manière à pouvoir engendrer une image de l'environnement observé ; et
- des moyens de liaison mécanique entre ledit dispositif optique et ledit détecteur.

Sur un tel système, on réalise un suivi du plan focal du dispositif optique par rapport à la matrice du détecteur infrarouge dans tout le domaine thermique d'utilisation du système optoélectronique. Ce suivi du plan focal optique sur la matrice du détecteur, à une tolérance donnée, est nécessaire pour pouvoir disposer d'une image focalisée, c'est-à-dire nette, susceptible d'être exploitée par des algorithmes usuels de traitement d'images.

Pour corriger d'éventuellles défocalisations provoquées par des variations thermiques, des méthodes d'athermalisation active et passive ont été développées. Certaines méthodes actives utilisent un mécanisme de refocalisation par déplacement, dans l'axe optique, d'une lentille ou d'un groupe de lentilles, ou par déplacement de prismes selon une direction orthogonale à cet axe. Ces méthodes, qui doivent générer des déplacements très précis, encombrent sensiblement l'architecture optique et mécanique par l'addition d'un ensemble complexe.

On connaît également des systèmes actifs de type électromécanique qui permettent de mettre en œuvre une athermalisation active d'un système optoélectronique du type précité, en réalisant un asservissement en position. De tels systèmes actifs comprennent généralement :
- des moteurs électriques de mise en mouvement ;
- des capteurs de position ;
- des électroniques de commande des moteurs ; et
- des logiciels d'asservissement.

Ces systèmes d'athermalisation active présentent toutefois de nombreux inconvénients, concernant en particulier :
- le coût : dû aux technologies (mécaniques, électroniques, logiciel) et aux composants utilisés ;
- l'encombrement (moteurs électriques, cartes électroniques, alimentation électrique) ;
- la fiabilité : liée à la complexité et à la présence de composants électroniques ; et
- la masse.

Pour remédier à ces inconvénients, la présente invention est relative à une athermalisation passive d'un système optoélectronique, cette athermalisation passive consistant à réaliser un système mécanique sans asservissement électromécanique.

On connaît des méthodes d'athermalisation passive de type optique. Une athermalisation de type optique consiste à prévoir des éléments optiques supplémentaires, dont les défocalisations thermiques peuvent compenser celle du dispositif optique du système. Toutefois, la multiplication des dioptres à traverser alors diminue sensiblement la transmission optique.

On connaît également, par le document US 5 557 474, une méthode d'athermalisation passive d'un système optique, selon laquelle plusieurs anneaux comportant des surfaces biseautées sont agencés entre deux lentilles. Les anneaux, qui ne possèdent pas tous le même coefficient de dilatation thermique, compensent l'espace entre les lentilles lors des variations thermiques. Cette solution permet une athermalisation passive d'un système optique sans avoir recours à des éléments optiques supplémentaires. Cependant, un tel procédé nécessite de calculer des angles entre les anneaux à partir des coefficients de dilatation des matériaux et de réaliser des pièces biseautées.

De telles méthodes usuelles d'athermalisation passive ne sont donc pas totalement satisfaisantes.

La présente invention concerne un procédé d'athermalisation passive d'un système optoélectronique, qui permet de remédier aux inconvénients précités.

A cet effet, selon l'invention, ledit procédé d'athermalisation d'un système optoélectronique du type comprenant :
- un dispositif optique qui est susceptible d'observer au moins une partie de l'environnement et qui présente un plan focal ;
- un détecteur qui coopère avec ledit dispositif optique et qui comprend une matrice de détection présentant une orientation stable par rapport audit plan focal ; et
- des moyens de liaison mécanique entre ledit dispositif optique et ledit détecteur,
   est remarquable en ce que :
   a) on détermine au moins une première loi de dilatation dudit dispositif optique dans un premier référentiel, et au moins une seconde loi de dilatation dudit détecteur dans un second référentiel, une loi de dilatation indiquant le déplacement dû à la dilatation en fonction de la température dans le référentiel correspondant ;
   b) on détermine, à partir desdites première et seconde lois de dilatation, au moins une loi de dilatation relative entre ledit dispositif optique et ledit détecteur dans un troisième référentiel ;
   c) on détermine des moyens de liaison mécanique présentant des propriétés de dilatation qui permettent de compenser ladite loi de dilatation relative dans une plage de températures prédéterminée ; et
   d) on agence sur ledit système optoélectronique les moyens de liaison mécanique ainsi déterminés.

Ainsi, grâce à i'invention, on réalise une athermalisation passive, en définissant et en prévoyant des moyens de liaison mécanique (entre le dispositif optique et le détecteur) qui présentent des propriétés de dilatation permettant de compenser les dilatations apparaissant au niveau du système optoélectronique, qui sont à l'origine de défocalisations, ces dilatations étant prédéterminées en fonction des propriétés du dispositif optique et du détecteur.

La détermination de la loi de suivi (loi de dilatation relative) est liée à la connaissance des lois comportementales thermiques du dispositif optique d'une part et du détecteur d'autre part, par rapport à un référentiel mécanique qui leur est propre.

Ainsi, grâce à l'invention, on peut se passer de systèmes actifs de type électromécanique, présentant les inconvénients précités, et disposer d'un système optoélectronique, qui est compact, léger et fiable.

En outre, la présente invention permet également d'obtenir les avantages suivants :
- un système d'athermalisation passive, donc autonome (pas d'alimentation, pas de câblage) ;
- une fiabilité et une compacité (pas d'équipements électromécaniques) ;
- une discrétion (pas de bruits, ni des vibrations émises) ; et
- une dissipation thermique (pas de puissance dissipée).

Dans le cadre de la présente invention, on détermine lesdites lois de dilatation selon au moins une direction de l'espace, mais de préférence selon deux directions ou les trois directions de l'espace.

Dans un mode de réalisation préféré, lesdits moyens de liaison mécanique comprennent au moins un élément en matériau composite, par exemple à base de fibres de carbone imprégnées de résine époxy, à savoir :
- au moins un élément en matériau composite et au moins un élément métallique, par exemple en un alliage d'aluminium ; alternativement, dans un mode de la réalisation qui ne fait pas partie de l'invention, les moyens de liaison mécanique peuvent comprendre
- uniquement un ou plusieurs éléments en matériau composite, un matériau composite comprenant de façon usuelle une préforme fibreuse constituée de fibres qui est noyée dans une matrice formée d'une résine.

Dans ce mode de réalisation préféré, de façon avantageuse, à l'étape c), pour obtenir des moyens de liaison mécanique présentant les propriétés de dilatation recherchées :
- on adapte les propriétés de la préforme fibreuse du matériau composite, notamment en adaptant au moins certains de ses paramètres suivants : le type des couches de fibres, l'orientation entre les couches, leur nombre et leur positionnement, et/ou en adaptant la matière des fibres ; et/ou
- on adapte la matière de la matrice (résine) du matériau composite, c'est-à-dire on choisit une matière appropriée.

Par ailleurs, dans un autre mode de réalisation qui ne fait pas partie de l'invention, lesdits moyens de liaison comprennent uniquement des éléments métalliques.

En outre, de façon avantageuse, à l'étape c), on détermine lesdits moyens de liaison mécanique en mettant en œuvre une méthode à la fois théorique et empirique, comprenant une étude théorique préalable, suivie d'essais et de simulations.

Par ailleurs, avantageusement, on prévoit de plus, sur ledit système optoélectronique, des moyens précisés ci-dessous, qui permettent de réaliser une insensibilisation à des phénomènes vibratoires, auxquels le système optoélectronique est susceptible d'être soumis.

La présente invention concerne également un système optoélectronique, athermalisé conformément à l'invention.

Selon l'invention, ledit système optoélectronique du type comprenant :
- un dispositif optique qui est susceptible d'observer l'environnement et qui présente un plan focal ;
- un détecteur qui coopère avec ledit dispositif optique et qui comprend une matrice de détection présentant une orientation stable par rapport audit plan focal ; et
- des moyens de liaison mécanique entre ledit dispositif optique et ledit détecteur,
est remarquable en ce que lesdits moyens de liaison mécanique présentent des propriétés de dilatation qui permettent de compenser une loi de dilatation relative déterminée à partir d'au moins une première loi de dilatation dudit dispositif optique dans un premier référentiel et d'au moins une seconde loi de dilatation dudit détecteur dans un second référentiel, une loi de dilatation indiquant le déplacement dû à la dilatation en fonction de la température dans le référentiel correspondant.

Dans le cadre de la présente invention, lesdits moyens de liaison mécanique comprennent :
- au moins un élément en matériau composite et au moins un élément métallique ; alternativement, dans un mode de la réalisation qui ne fait pas partie de l'invention, les moyens de liaison mécanique peuvent comprendre
- uniquement un ou plusieurs éléments en matériau composite ; ou
- uniquement un ou plusieurs éléments métalliques.

A titre d'illustration, la présente invention peut, notamment, être utilisée pour réaliser une athermalisation d'un système optoélectronique, embarqué sur un avion, qui comprend un domaine d'emploi présentant les caractéristiques suivantes :
- une plage de températures : de -55°C à + 100°C (mais potentiellement plus) ;
- un environnement vibratoire représentatif d'un système embarqué sur un avion, avec une spécificité à une tenue en endurance : niveaux de type 8g sur une bande de 0 Hz - 2000 Hz, g étant l'accélération de la pesanteur ; et
- un environnement mécanique également représentatif d'un système embarqué sur un avion, avec une spécificité à une tenue à des chocs d'atterrissage répétés : niveaux de type 400g en équivalent quasi-statique.

Les figures du dessin annexé feront bien comprendre comment l'invention peut être réalisée. Sur ces figures, des références identiques désignent des éléments semblables.
La figure 1 est un schéma synoptique d'un système optoélectronique, sur lequel on réalise une athermalisation conforme à l'invention.
La figure 2 est une vue en perspective d'un système optoélectronique, sur lequel on réalise une athermalisation conforme à l'invention.
La figure 3 montre le système optoélectronique de la figure 2 en vue de dessus.
La figure 4 est une vue schématique en coupe selon la ligne A-A de la figure 3.

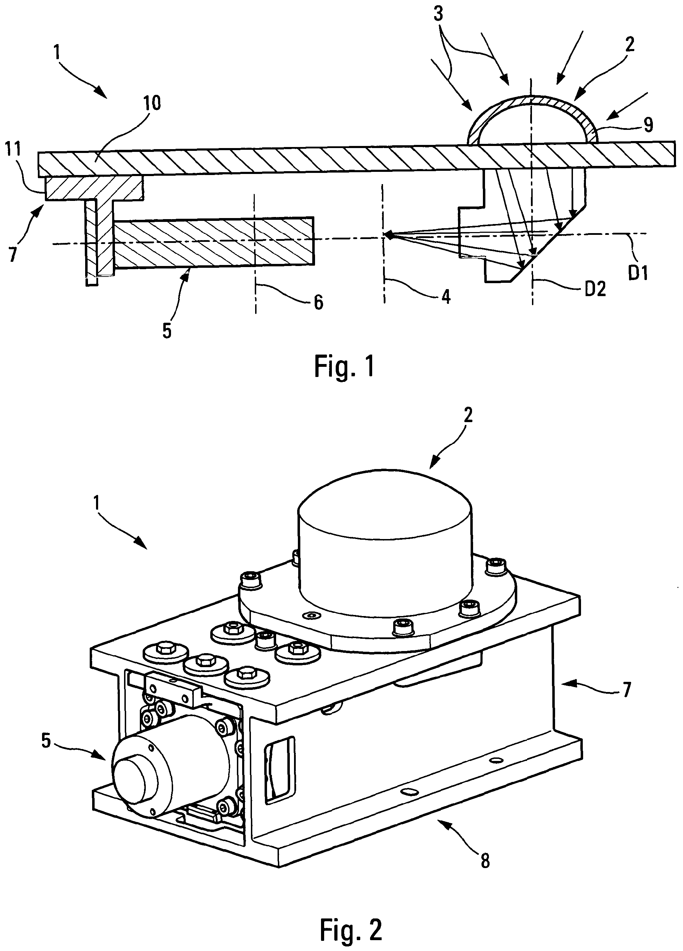

La présente invention s'applique à un système optoélectronique 1 tel que représenté schématiquement sur la figure 1, qui comprend de façon usuelle :
- un dispositif optique 2 usuel, qui est enfermé dans un dôme 9, qui est susceptible d'observer l'environnement autour du système 1, comme illustré par des flèches 3, et qui présente un plan focal 4, plan de formation de l'image ;
- un détecteur 5 usuel, par exemple infrarouge, qui coopère avec ledit dispositif optique 2 et qui comprend une matrice de détection 6 qui est confondue, à une tolérance donnée près, avec le plan focal 4, pour pouvoir former une image électronique (nette et exploitable) de l'environnement observé par le dispositif optique 2 ; et
- des moyens 7 pour lier ensemble, mécaniquement, ledit dispositif optique 2 et ledit détecteur 5. Sur la figure 2, on a représenté une architecture portante 8.

Bien que non exclusivement, ce système optoélectronique 1 peut être installé plus particulièrement sur un engin (non représenté), notamment mobile, tel qu'un navire, un char ou un avion par exemple, qui est susceptible d'être pris pour cible par un objet volant tel qu'un missile. Dans une telle application, ledit système optoélectronique 1 est destiné à détecter un objet volant de ce type, en prenant des images de l'environnement qui sont ensuite analysées par des moyens usuels (non représentés) de traitement d'images.

En particulier, lorsqu'il est monté sur un avion, ledit système optoélectronique 1 peut, notamment, être utilisé dans un domaine d'emploi présentant les caractéristiques suivantes :
- une plage de températures de -55°C à + 100°C (mais potentiellement plus) ;
- un environnement vibratoire représentatif d'un système embarqué sur un avion, avec la spécificité à la tenue en endurance : niveaux de type 8g sur une bande de 0 Hz - 2000 Hz ; et
- un environnement mécanique également représentatif d'un système embarqué sur un avion, avec une spécificité à la tenue aux chocs d'atterrissage répétés : niveaux de type 400g en équivalent quasi-statique.

La présente invention a pour objet de rendre ledit système optoélectronique 1 insensible aux agressions et variations thermiques, mais également vibratoires et mécaniques, qu'il est susceptible de rencontrer dans son domaine d'emploi.

Selon l'invention, pour réaliser une athermalisation dudit système optoélectronique 1, c'est-à-dire une insensibilité aux variations thermiques, on met en oeuvre les opérations suivantes :
a) on détermine au moins une première loi de dilatation dudit dispositif optique 2 dans un (premier) référentiel mécanique propre, et au moins une seconde loi de dilatation dudit détecteur 5 dans un (second) référentiel mécanique propre. Une loi de dilatation indique le déplacement dû à la dilatation, en fonction de la température, dans le référentiel correspondant. Dans le cadre de la présente invention, une dilatation peut être positive (dilatation proprement dite) ou négative (contraction). De préférence, ces première et seconde lois de dilatation sont déterminées usuellement et sont directement fournies par les fournisseurs ou fabricants, respectivement, du dispositif optique 2 et du détecteur 5. Ces lois de dilatation peuvent également être imposées (dans une certaine limite) aux fournisseurs ;
b) à partir de ces première et seconde lois de dilatation, ainsi que des relations connues (sur le système 1) entre lesdits premier et second référentiels et un troisième référentiel, on détermine au moins une loi de dilatation relative entre ledit dispositif optique 2 et ledit détecteur 5, dans ce troisième référentiel lié audit système 1 ;
c) on détermine et on fabrique des moyens de liaison mécanique 7 qui présentent des propriétés de dilatation qui sont telles qu'elles permettent de compenser ladite loi de dilatation relative, et ceci dans une plage de températures prédéterminée, de préférence la plage d'emploi du système optoélectronique 1 ; et
d) on installe sur ledit système optoélectronique 1 les moyens de liaison mécanique 7 ainsi déterminés et fabriqués.

A l'étape c), pour déterminer lesdits moyens de liaison mécanique 7, on met en œuvre une méthode à la fois théorique et empirique. Cette méthode comprend une étude théorique préalable permettant de déterminer les caractéristiques générales des éléments desdits moyens 7, suivie d'essais et/ou de simulations destinés à affiner ces caractéristiques de manière à obtenir des propriétés de dilatation proches de celles recherchées (relatives à ladite loi de dilatation relative).

Ainsi, grâce à l'invention, l'athermalisation du système optoélectronique 1 est obtenue en définissant et en prévoyant des moyens de liaison mécanique 7 (entre le dispositif optique 2 et le détecteur 5) qui présentent des propriétés de dilatation permettant de compenser les dilatations apparaissant au niveau du système optoélectronique 1, qui peuvent générer des défocalisations, ces dilatations étant prédéterminées en fonction des propriétés du dispositif optique 2 et du détecteur 5.

Ainsi, on réalise un suivi du plan focal 4 du dispositif optique 2 par rapport à la matrice 6 du détecteur 5, de préférence infrarouge, dans tout le domaine thermique d'utilisation du système optoélectronique 1. Ce suivi du plan focal optique 4 sur la matrice 6 du détecteur 5, à une tolérance donnée, est nécessaire pour pouvoir disposer d'une image focalisée, c'est-à-dire nette, apte à être exploitée par des algorithmes usuels de traitement d'images.

La détermination de la loi de suivi (loi de dilatation relative) est donc liée à la connaissance des lois comportementales thermiques du dispositif optique 2 d'une part et du détecteur 5 d'autre part, par rapport à un référentiel mécanique qui leur est propre.

Ainsi, grâce à l'invention, on peut se passer de systèmes actifs de type électromécanique et disposer d'un système optoélectronique 1 qui est à la fois compact, léger et fiable.

Dans le cadre de la présente invention, on détermine les lois de dilatation selon au moins une direction de l'espace, mais de préférence selon deux ou les trois directions de l'espace. A titre d'illustration, dans l'exemple représenté sur les figures 1 à 4, on peut définir lesdites lois selon deux directions correspondant respectivement :
- à une direction D1 qui est confondue avec l'axe longitudinal du détecteur 5 ; et
- à une direction D2 qui est verticale lorsque le système 1 est agencé horizontalement.

Selon l'invention, lesdits moyens de liaison mécanique 7 présentent donc des propriétés de dilatation qui permettent de compenser une loi de dilatation relative déterminée à partir d'une première loi de dilatation dudit dispositif optique 2 et d'une seconde loi de dilatation dudit détecteur 5.

Dans un mode de réalisation préféré, lesdits moyens de liaison mécanique 7 comprennent au moins un élément 10 en matériau composite, par exemple à base de fibres de carbone imprégnées de résine époxy. Un tel élément 10 comporte, de façon usuelle, une préforme fibreuse constituée de fibres, qui est noyée dans une matrice formée d'une résine.

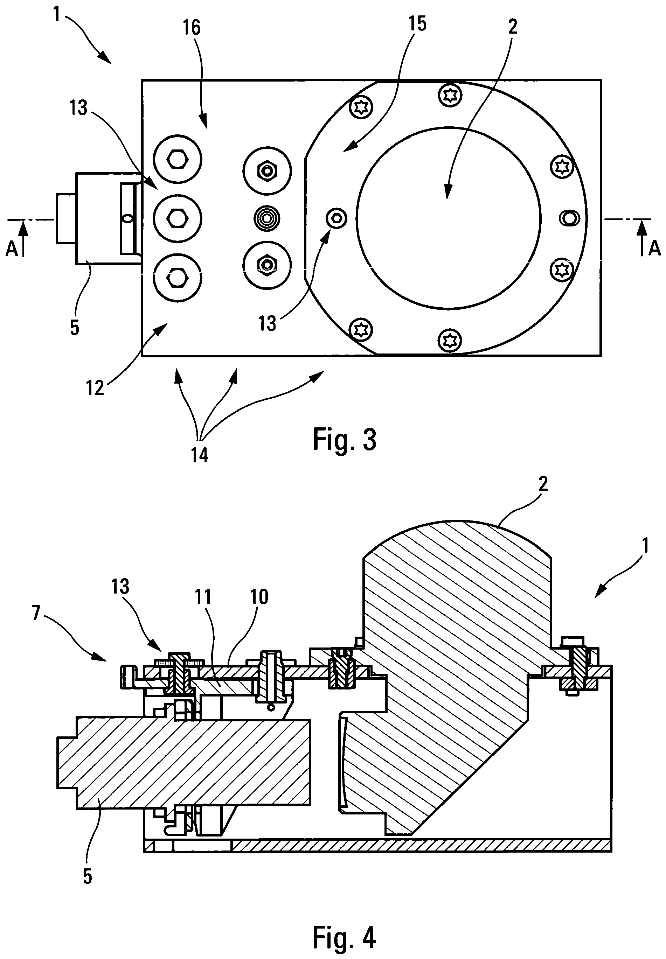

Dans ce mode de réalisation préféré, lesdits moyens de liaison mécanique 7 peuvent comporter :
- au moins un élément 10 en matériau composite et au moins un élément métallique 11, par exemple en un alliage d'aluminium, comme représenté sur l'exemple préféré des figures 1 et 4 ; alternativement, dans un mode de la réalisation qui ne fait pas partie de l'invention, les moyens de liaison mécanique peuvent comprendre
- uniquement un ou plusieurs éléments en matériau composite.

Dans ce mode de réalisation préféré, à l'étape c), pour obtenir les propriétés de dilatation recherchées d'un ou plusieurs éléments 10 en matériau composite :
- on adapte les propriétés de la préforme fibreuse du matériau composite, notamment en adaptant au moins certains des paramètres suivants : le type des couches de fibres, l'orientation entre les couches, leur nombre et leur positionnement, et/ou en adaptant la matière des fibres ; et/ou
- on adapte la matière de la matrice (résine) du matériau composite.

Une combinaison de matériaux métalliques et de matériaux composites du type empilage de tissus préimprégnés ou drapage, permet notamment, pour un choix de matériaux donné et une implantation définie, d'adapter la loi d'athermalisation de compensation en agissant sur la composition des matériaux composites. En effet, l'action sur le drapage permet une certaine latitude sur le coefficient de dilatation global de la structure retenue et permet ainsi de l'ajuster, afin d'obtenir la meilleure focalisation optique possible.

Ainsi, le choix des tissus (tissus unidirectionnels, équilibrés...) et des orientations (angles entres les couches), le nombre de couches et leur positionnement permettent une adaptation du coefficient de dilatation.

A titre d'illustration, dans l'exemple représenté sur les figures 2 à 4, les matériaux utilisés peuvent être :
- pour les supports (élément 10) en matériaux composites : des fibres de carbone HR et une résine époxy ; et
- pour les supports métalliques (élément 11) un alliage d'aluminium.

Bien entendu, on peut également prévoir :
- d'autres matériaux composites, tissés (fibres de verre, carbones de natures différentes, résines différentes,... ) ou non (plastiques moulés, chargés métalliques ou fibres,...) ; et
- d'autres matériaux métalliques (acier inox ou non, invar, covar,...).

Par ailleurs, dans un autre mode de réalisation qui ne fait pas partie de l'invention (non représenté), lesdits moyens de liaison mécanique 7 peuvent être réalisés à base uniquement d'éléments métalliques, ces éléments métalliques devant bien entendu présenter les propriétés de dilatation globales recherchées.

Les matériaux des moyens de liaison mécanique 7 peuvent être choisis en fonction des matériaux utilisés sur le système 1, et notamment des matériaux (généralement métalliques) du dispositif optique 2 et des matériaux (également métalliques en général) du détecteur 5.

Par ailleurs, ledit système optoélectronique 1 comporte, de plus, des moyens 12 permettant de réaliser une insensibilisation à des phénomènes vibratoires, auxquels il est susceptible d'être soumis. En effet, afin d'obtenir une image bien focalisée quel que soit le domaine d'emploi (thermique, vibratoire...) du système optoélectronique 1, il est nécessaire que l'architecture mécanique soit conçue afin de :
- maintenir le système 1 suffisamment focalisé dans le domaine d'utilisation ;
- maîtriser le comportement statique du système 1 vis-à-vis des frottements, glissements,... ; et
- maîtriser le comportement dynamique du système 1 vis-à-vis des excitations interne et/ou externe.

A cet effet, on peut agir sur au moins certains des paramètres suivants :
- les états des surfaces ;
- les liaisons, afin de créer des points fixes par rapport à des dilatations thermiques ;
- les efforts dans les liaisons ;
- l'introduction d'éléments favorisant le glissement ; et
- le nombre et la position des liaisons, dans le but de maîtriser des phénomènes de bilame lors de déformations thermiques et/ou de maîtriser les comportements dynamiques par rapport à des excitations vibratoires.

En outre, une attention particulière peut être portée aux paramètres impactant les coefficients de frottement entre les éléments, à savoir :
- la rugosité des surfaces ;
- les planéités et les parallélismes ; et
- l'utilisation de matériaux favorisant le glissement (revêtements secs,...).

Les liaisons entre les éléments doivent également être parfaitement maîtrisées afin d'éviter l'apparition de jeu (ou, au moins, pour limiter le jeu). En effet, il en résulterait des décalages ou des phénomènes d'hystérésis dans les déplacements/rotations lors des fonctionnements en température et/ou sous sollicitation vibratoire. Ces liaisons sont du type :
- montage serré (type conique...) ;
- montage fretté (type pion/alésage...) ;
- montage collé.

Comme représenté sur les figures 3 et 4, ledit système optoélectronique 1 peut ainsi comporter, notamment :
- des liaisons 13 sans jeu ;
- des liaisons 14 qui sont positionnées pour maîtriser les comportements dynamique et thermique ;
- des éléments de glissement 15 qui sont interposés entre le dispositif optique 2 et les moyens de liaison mécanique 7 ; et
- des surfaces et des états de surface adaptés, comme illustré par une flèche 16.

En plus des avantages précités, la présente invention permet également d'obtenir un système d'athermalisation 1 qui est notamment :
- autonome (pas d'alimentation, pas de câblage) ;
- fiable ;
- compact (pas d'équipement électromécanique) ;
- discret (pas de bruit ou de vibration) ; et
- de coût réduit.

## Revendications

1. Procédé d'athermalisation d'un système optoélectronique (1) comprenant :
- un dispositif optique (2) qui est susceptible d'observer au moins une partie de l'environnement et qui présente un plan focal (4) ;
- un détecteur (5) qui coopère avec ledit dispositif optique (2) et qui comprend une matrice de détection (6) présentant une orientation stable par rapport audit plan focal (4) ; et
- des moyens de liaison mécanique (7) entre ledit dispositif optique (2) et ledit détecteur (5),
procédé selon lequel :
a) on détermine au moins une première loi de dilatation dudit dispositif optique (2) dans un premier référentiel, et au moins une seconde loi de dilatation dudit détecteur (5) dans un second référentiel, une loi de dilatation indiquant le déplacement dû à la dilatation en fonction de la température dans le référentiel correspondant selon au moins une direction de l'espace ;
b) on détermine, à partir desdites première et seconde lois de dilatation, au moins une loi de dilatation relative entre ledit dispositif optique (2) et ledit détecteur (5) dans un troisième référentiel ;
c) on détermine des moyens de liaison mécanique (7) qui présentent des propriétés de dilatation permettant de compenser ladite loi de dilatation relative dans une plage de températures prédéterminée et qui comprennent au moins un élément (10) en matériau composite, au moins en adaptant ledit matériau composite pour obtenir les propriétés de dilatation recherchées, en adaptant les propriétés d'une préforme fibreuse dudit matériau composite, en adaptant au moins certains des paramètres suivants de la préforme : le type des couches des fibres, l'orientation entre les couches, leur nombre et leur positionnement, et en adaptant la matière des fibres de la préforme, lesdits moyens de liaison mécanique (7) étant déterminés en mettant en œuvre une méthode comprenant une étude théorique préalable permettant de déterminer les caractéristiques générales des éléments des moyens de liaison mécanique (7), suivie d'essais et/ou de simulations destinés à affiner ces caractéristiques de manière à obtenir les propriétés de dilatation, lesdits moyens de liaison mécanique (7) comprenant au moins un élément (10) en matériau composite et au moins un élément métallique (11) ; et
d) on agence sur ledit système optoélectronique (1) les moyens de liaison mécanique (7) ainsi déterminés.

2. Procédé selon la revendication 1,
**caractérisé en ce qu'**à l'étape c), on adapte la matière de la matrice du matériau composite pour obtenir les propriétés de dilatation recherchées.

3. Procédé selon l'une des revendications 1 et 2,
**caractérisé en ce que** l'on prévoit, de plus, des moyens (12) sur ledit système optoélectronique (1) permettant de réaliser une insensibilisation à des phénomènes vibratoires, auxquels ledit système (1) est susceptible d'être soumis.

4. Système optoélectronique athermalisé comprenant :
- un dispositif optique (2) qui est susceptible d'observer au moins une partie de l'environnement et qui présente un plan focal (4) ;
- un détecteur (5) qui coopère avec ledit dispositif optique (2) et qui comprend une matrice de détection (6) présentant une orientation stable par rapport audit plan focal (4) ; et
- des moyens de liaison mécanique (7) entre ledit dispositif optique (2) et ledit détecteur (5), qui comprennent au moins un élément (10) en matériau composite et qui présentent des propriétés de dilatation permettant, au moins par l'adaptation dudit matériau composite, de compenser une loi de dilatation relative entre ledit dispositif optique (2) et ledit détecteur (5), ladite loi de dilatation étant déterminée à partir d'au moins une première loi de dilatation dudit dispositif optique (2) dans un premier référentiel et d'au moins une seconde loi de dilatation dudit détecteur (5) dans un second référentiel, une loi de dilatation indiquant le déplacement dû à la dilatation en fonction de la température dans le référentiel correspondant selon au moins une direction de l'espace, lesdits moyens de liaison mécanique (7) étant déterminés en mettant en œuvre une méthode comprenant une étude théorique préalable permettant de déterminer les caractéristiques générales des éléments des moyens de liaison mécanique (7), suivie d'essais et/ou de simulations destinés à affiner ces caractéristiques de manière à obtenir les propriétés de dilatation, lesdits moyens de liaison mécanique (7) comprennent au moins un élément (10) en matériau composite et au moins un élément métallique (11).

## Patentansprüche

1. Entthermalisierungsverfahren für ein optoelektronisches System (1), umfassend:
- eine optische Vorrichtung (2), die imstande ist, mindestens einen Teil der Umgebung zu beobachten, und die eine Brennebene (4) aufweist;
- einen Detektor (5), der mit der optischen Vorrichtung (2) zusammenwirkt und der eine Detektionsmatrix (6) umfasst, die eine stabile Ausrichtung in Bezug auf die Brennebene (4) aufweist; und
- Mittel zur mechanischen Verbindung (7) zwischen der optischen Vorrichtung (2) und dem Detektor (5),
Verfahren, bei dem:
a) mindestens ein erstes Ausdehnungsgesetz der optischen Vorrichtung (2) in einem ersten Bezugssystem, und mindestens ein zweites Ausdehnungsgesetz des Detektors (5) in einem zweiten Bezugssystem bestimmt werden, wobei ein Ausdehnungsgesetz auf die Verschiebung aufgrund der Ausdehnung in Abhängigkeit von der Temperatur in dem entsprechenden Bezugssystem in mindestens einer Richtung des Raumes hinweist;
b) aus dem ersten und zweiten Ausdehnungsgesetz mindestens ein relatives Ausdehnungsgesetz zwischen der optischen Vorrichtung (2) und dem Detektor (5) in einem dritten Bezugssystem bestimmt wird;
c) Mittel zur mechanischen Verbindung (7) bestimmt werden, die Ausdehnungseigenschaften aufweisen, die es ermöglichen, das relative Ausdehnungsgesetz in einem vorbestimmten Temperaturbereich auszugleichen, und die mindestens ein Element (10) aus einem Verbundwerkstoff umfassen, mindestens durch Anpassen des Verbundwerkstoffes zum Erhalten der gesuchten Ausdehnungseigenschaften, durch Anpassen der Eigenschaften einer faserigen Vorform des Verbundwerkstoffes, durch Anpassen mindestens gewisser der folgenden Parameter der Vorform: des Typs der Schichten der Fasern, der Ausrichtung zwischen den Schichten, deren Anzahl und deren Positionierung, und durch Anpassen des Materials der Fasern der Vorform, wobei die mechanischen Verbindungsmittel (7) bestimmt werden, indem eine Methode umgesetzt wird, die eine theoretische Vorstudie umfasst, die es ermöglicht, die allgemeinen Merkmale der Elemente der mechanischen Verbindungsmittel (7) zu bestimmen, gefolgt von Versuchen und/ oder Simulationen, die dazu bestimmt sind, diese Merkmale zu verfeinern, um die Ausdehnungseigenschaften zu erhalten, wobei die mechanischen Verbindungsmittel (7) mindestens ein Element (10) aus einem Verbundwerkstoff und mindestens ein metallisches Element (11) umfassen; und
d) die so bestimmten mechanischen Verbindungsmittel (7) auf dem optoelektronischen System (1) angeordnet werden.

2. Verfahren nach Anspruch 1,
**dadurch gekennzeichnet, dass** im Schritt c) das Material der Matrix des Verbundwerkstoffes angepasst wird, um die gesuchten Ausdehnungseigenschaften zu erhalten.

3. Verfahren nach einem der Ansprüche 1 und 2,
**dadurch gekennzeichnet, dass** weiter Mittel (12) auf dem optoelektronischen System (1) vorgesehen sind, die es ermöglichen, eine Desensibilisierung gegenüber Schwingungsphänomenen zu realisieren, denen das System (1) ausgesetzt sein kann.

4. Entthermalisiertes optoelektronisches System, umfassend:
- eine optische Vorrichtung (2), die imstande ist, mindestens einen Teil der Umgebung zu beobachten, und die eine Brennebene (4) aufweist;
- einen Detektor (5), der mit der optischen Vorrichtung (2) zusammenwirkt und der eine Detektionsmatrix (6) umfasst, die eine stabile Ausrichtung in Bezug auf die Brennebene (4) aufweist; und
- Mittel zur mechanischen Verbindung (7) zwischen der optischen Vorrichtung (2) und dem Detektor (5), die mindestens ein Element (10) aus einem Verbundwerkstoff umfassen und die Ausdehnungseigenschaften aufweisen, die es ermöglichen, mindestens durch das Anpassen des Verbundwerkstoffes ein relatives Ausdehnungsgesetz zwischen der optischen Vorrichtung (2) und dem Detektor (5) zu kompensieren, wobei das Ausdehnungsgesetz aus mindestens einem ersten Ausdehnungsgesetz der optischen Vorrichtung (2) in einem ersten Bezugssystem und mindestens einem zweiten Ausdehnungsgesetz des Detektors (5) in einem zweiten Bezugssystem bestimmt wird, wobei ein Ausdehnungsgesetz auf die Verschiebung aufgrund der Ausdehnung in Abhängigkeit von der Temperatur in dem entsprechenden Bezugssystem in mindestens einer Richtung des Raumes hinweist, wobei die Mittel zur mechanischen Verbindung (7) bestimmt werden, indem eine Methode umgesetzt wird, die eine theoretische Vorstudie umfasst, die es ermöglicht, die allgemeinen Merkmale der Elemente der Mittel zur mechanischen Verbindung (7) zu bestimmen, gefolgt von Versuchen und/ oder Simulationen, die dazu bestimmt sind, diese Merkmale zu verfeinern, um die Ausdehnungseigenschaften zu erhalten, wobei die Mittel zur mechanischen Verbindung (7) mindestens ein Element (10) aus einem Verbundwerkstoff und mindestens ein metallisches Element (11) umfassen.

## Claims

1. Method for athermalisation of an optoelectronic system (1) comprising:
- an optical device (2) that is able to observe at least one portion of the environment and which has a focal plane (4);
- a detector (5) that engages with said optical device (2) and which comprises a detection matrix (6) that has a stable orientation with respect to said focal plane (4); and
- means of mechanical connection (7) between said optical device (2) and said detector (5),
method according to which:
a) at least one first expansion law of said optical device (2) in a first reference standard is determined, and at least one second expansion law of said detector (5) in a second reference standard, an expansion law that indicates the displacement due to the expansion according to the temperature in the corresponding reference standard in at least one direction of space;
b) from said first and second expansion laws, at least one relative expansion law between said optical device (2) and said detector (5) in a third reference standard is determined;
c) means of mechanical connection (7) are determined that have expansion properties that make it possible to offset said relative expansion law in a predetermined range of temperatures and which comprise at least one element (10) made of composite material, at least by adapting said composite material to obtain the expansion properties sought, by adapting the properties of a fibrous preform of said composite material, by adapting at least some of the following parameters of the preform: the type of layers of the fibres, the orientation between the layers, the number and the positioning thereof, and by adapting the material of the fibres of the preform, said means of mechanical connection (7) being determined by implementing a method comprising a prior theoretical study that makes it possible to determine the general features of the elements of the means of mechanical connection (7), followed by tests and/or simulations intended to refine these features so as to obtain the expansion properties, said means of mechanical connection (7) comprising at least one element (10) made of composite material and at least one metal element (11); and
d) the means of mechanical connection (7) thus determined are arranged on said optoelectronic system (1).

2. Method according to claim 1,
**characterised in that** in step c), the material of the matrix of the composite material is adapted to obtain the expansion properties sought.

3. Method according to one of claims 1 and 2,
**characterised in that**, in addition, means (12) are provided on said optoelectronic system (1) that make it possible to carry out a desensitisation to vibratory phenomena, to which said system (1) can be subjected to.

4. Athermalised optoelectronic system comprising:
- an optical device (2) which is able to observe at least one portion of the environment and which has a focal plane (4);
- a detector (5) that engages with said optical device (2) and which comprises a detection matrix (6) that has a stable orientation with respect to said focal plane (4); and
- means of mechanical connection (7) between said optical device (2) and said detector (5), which comprise at least one element (10) made of composite material and that have expansion properties that make it possible, at least by the adaptation of said composite material, to offset a relative expansion law between said optical device (2) and said detector (5), said expansion law being determined from at least one first expansion law of said optical device (2) in a first reference standard and from at least one second expansion law of said detector (5) in a second reference standard, an expansion law that indicates the displacement due to the expansion according to the temperature in the corresponding reference standard in at least one direction of space, said means of mechanical connection (7) being determined by implementing a method comprising a prior theoretical study that makes it possible to determine the general features of the elements of the means of mechanical connection (7), followed by tests and/or simulations intended to refine these features so as to obtain the expansion properties, said means of mechanical connection (7) comprise at least one element (10) made of composite material and at least one metal element (11) .
